# FASCICULE DE BREVET EUROPEEN

(11) **EP 1 073 563 B1**
(45) Date de publication et mention de la délivrance du brevet: **14.01.2004**
(21) Numéro de dépôt: 00903758.1
(22) Date de dépôt: 09.02.2000
(51) Int. Cl.: B60G 17/02, B60G 15/07, B60G 11/16, F16F 1/12

(54) **JAMBE DE FORCE D'UNE SUSPENSION DE ROUE DE TYPE MAC PHERSON**
FEDERBEIN FÜR EINE RADAUFHÄNGUNG NACH DER MACPHERSON- BAUART
SHOCK STRUT OF MCPHERSON WHEEL SUSPENSION

(30) Priorité: 19.02.1999 FR 9902075
(43) Date de publication de la demande: 07.02.2001
(73) Titulaire: Compagnie Générale des Etablissement Michelin-Michelin & Cie, 63000 Clermont-Ferrand (FR)
(72) Inventeur: AUBAREDE, Francis, F-63230 Pontgibaud (FR); DUCLOUX, Antoine, F-58260 La Machine (FR)
(74) Mandataire: Abello, Michel
(86) Numéro de dépôt international: PCT/FR2000/000302
(87) Numéro de publication internationale: WO 2000/048854

(56) Documents cités:
- EP-A- 0 780 250
- DE-A- 4 021 314
- DE-A- 4 110 471
- DE-C- 893 760
- FR-A- 1 044 393
- FR-A- 2 297 150
- US-A- 3 717 354
- US-A- 4 474 363
- PATENT ABSTRACTS OF JAPAN vol. 1997, no. 08, 29 août 1997 (1997-08-29) & JP 09 100858 A (TOYODA GOSEI CO LTD), 15 avril 1997 (1997-04-15)

## Description

L'invention concerne une jambe de force d'une suspension de roue de type Mac Pherson, comportant un amortisseur avec un corps et une tige. La tige est entourée par un ressort hélicoïdal. Le ressort hélicoïdal est monté précontraint entre un siège inférieur d'une coupelle inférieure solidaire du corps d'amortisseur et un siège supérieur d'une coupelle supérieure traversée par la tige d'amortisseur. Le corps d'amortisseur est monté solidaire d'un porte-moyeu définissant un axe de rotation de la roue.

Le document EP-0 780 250 A2 décrit un réglage précis d'une jambe de force de suspension Mac Pherson, à l'aide de moyens de réglage disposés sur la jambe et en employant, de préférence, un banc de mesure approprié. Pour obtenir un bon fonctionnement de la jambe, il convient de contrôler de manière précise l'effort tranchant appliqué à la tige d'amortisseur. A cet effet, il est connu d'incliner l'axe du ressort par rapport à l'axe de la tige d'amortisseur selon une inclinaison calculée pour minimiser l'effort tranchant sur la tige d'amortisseur. Cependant, il est également connu que la résultante des efforts exercés par le ressort est susceptible d'exercer un couple autour de l'axe de pivot, qu'il est également nécessaire de bien maîtriser.

Un but de l'invention est de perfectionner la technique connue décrite dans le document EP-0 780 250 A2, en proposant une nouvelle jambe de force permettant un réglage rapide et précis, de fabrication simple et économique.

L'invention a pour objet une jambe de force d'une suspension de roue de type Mac Pherson, comportant un amortisseur avec un corps et une tige ; ladite tige étant entourée par un ressort hélicoïdal ; ledit ressort hélicoïdal étant monté entre une coupelle inférieure solidaire du corps d'amortisseur et une coupelle supérieure traversée par la tige d'amortisseur ; caractérisée par le fait que la jambe de force comporte des moyens capables d'immobiliser la première spire du ressort sur et par rapport à la coupelle inférieure en différentes positions prédéterminées sur la coupelle inférieure.

Selon d'autres caractéristiques de l'invention :

Le ressort comporte une extrémité s'étendant transversalement à une direction de translation définie par les différentes positions prédéterminées et comporte une partie sensiblement rectiligne parallèle à la direction de translation.

Selon une première variante de l'invention, ladite extrémité du ressort s'étend transversalement à la direction de translation et comporte une conformation d'indexation.

Dans un premier mode de réalisation de cette première variante, cette conformation d'indexation comporte au moins un orifice apte à être traversé par un moyen mécanique de liaison à la coupelle inférieure.

Dans un deuxième mode de réalisation de cette première variante, cette conformation d'indexation comporte au moins une extrémité recourbée apte à être insérée dans un orifice d'indexation choisi parmi une pluralité d'orifices réalisés dans la coupelle inférieure.

Selon une deuxième variante de l'invention correspondant à un troisième mode de réalisation, ladite extrémité du ressort s'étend transversalement à la direction de translation et peut être solidarisée à la coupelle inférieure par un moyen entourant au moins partiellement ladite extrémité. Ce moyen entourant au moins partiellement ladite extrémité du ressort présente, avantageusement, une conformation en collier ou en patte recourbée. Cette conformation en collier ou en patte recourbée présente une extrémité de fixation par un moyen mécanique de liaison à la coupelle inférieure.

Dans les deux variantes de l'invention, le moyen mécanique de liaison à la coupelle inférieure est, de préférence, un moyen remplaçable, et peut être du genre vis, goupille, boulon ou analogue.

De préférence, ladite partie rectiligne parallèle à la direction de translation est parallèle à la direction d'avancement d'un véhicule auquel la jambe de force est destinée.

L'invention sera mieux comprise grâce à la description qui va suivre, donnée à titre d'exemple non limitatif, en référence aux dessins annexés, dans lesquels :
- la figure 1 représente schématiquement une vue de dessus selon la flèche I de la figure 2 d'un premier mode de réalisation de l'invention ;
- la figure 2 représente schématiquement une vue en section selon la ligne II-II de la figure 1 du premier mode de réalisation de l'invention ;
- la figure 3 représente schématiquement une vue en section selon la ligne III-III de la figure 1 du premier mode de réalisation de l'invention ;
- la figure 4 représente schématiquement une vue selon la flèche IV de la figure 5 d'un deuxième mode de réalisation de l'invention ;
- la figure 5 représente schématiquement une vue en section selon la ligne V-V de la figure 4 du deuxième mode de réalisation de l'invention ;
- la figure 6 représente schématiquement une vue en section selon la ligne VI-VI de la figure 4 du deuxième mode de réalisation de l'invention ;
- la figure 7 représente schématiquement une vue selon la flèche VII de la figure 8 d'un troisième mode de réalisation de l'invention ;
- la figure 8 représente schématiquement une vue en section selon la ligne VIII-VIII de la figure 7 du troisième mode de réalisation de l'invention ;
- la figure 9 représente schématiquement une vue en section selon la ligne IX-IX de la figure 7 du troisième mode de réalisation de l'invention.

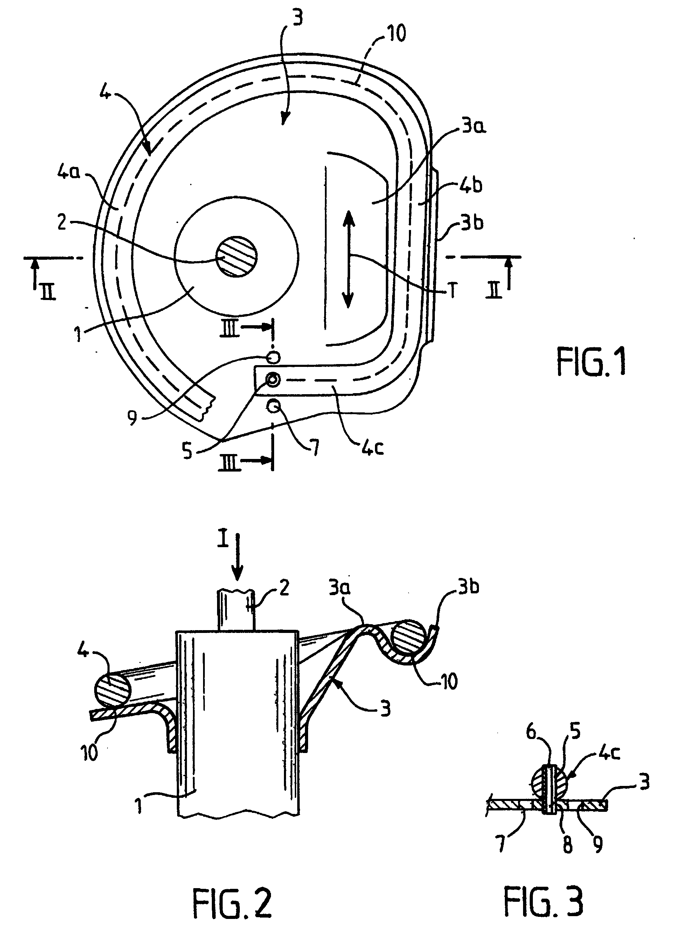

En référence aux figures 1 à 3, une jambe de suspension Mac Pherson comporte un amortisseur avec un corps 1 et une tige 2. Une coupelle inférieure 3 est montée solidaire du corps de l'amortisseur et un ressort 4 est monté entre la coupelle inférieure 3 et une coupelle supérieure, non représentée.

Le ressort hélicoïdal 4 présente une partie hélicoïdale 4a, une partie rectiligne 4b guidée en translation dans une conformation 3a, 3b formant cuvette de translation dans la direction T.

Une extrémité 4c du ressort, recourbée transversalement par rapport à la partie rectiligne 4b, est sensiblement perpendiculaire à cette partie rectiligne 4b. L'extrémité 4c s'étend, par conséquent, transversalement et sensiblement perpendiculairement à la direction T de translation.

La partie 4c d'extrémité du ressort hélicoïdal 4 présente en 5 une conformation d'indexation réalisée sous forme d'un orifice apte à être traversé par une goupille élastique 6. La goupille élastique 6 peut être positionnée dans un des trois orifices 7, 8 ou 9 pour réaliser un positionnement de l'extrémité 4c du ressort par rapport à la coupelle 3.

Du fait que l'appui du ressort hélicoïdal sur la coupelle inférieure 3 s'effectue le long de la ligne 10, le déplacement du ressort dans une position correspondant à l'orifice 7 ou à l'orifice 9 est possible tout en assurant le maintien en appui de la ligne 10 sur la coupelle inférieure 3.

Ce premier mode de réalisation permet de régler la position du ressort par rapport à l'axe de l'amortisseur de manière simple et économique, par exemple en déplaçant l'extrémité 4c à l'aide d'un maillet jusqu'à la position choisie correspondant au réglage recherché de l'inclinaison du ressort par rapport à l'axe de l'amortisseur, après avoir extrait la goupille élastique 6.

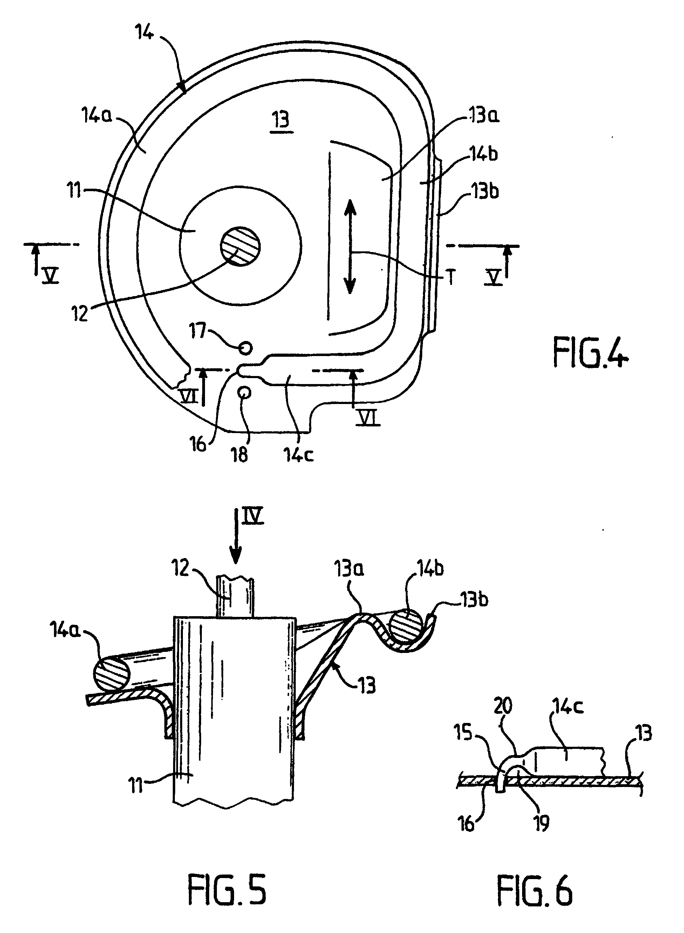

En référence aux figures 4 à 6, une jambe de suspension Mac Pherson comporte un amortisseur avec un corps 11 et une tige 12, une coupelle inférieure 13 solidaire du corps 11 d'amortisseur, un ressort hélicoïdal 14 en appui sur la coupelle inférieure 13 et monté entre la coupelle inférieure 13 et une coupelle supérieure non représentée.

Le ressort hélicoïdal 14 comporte une extrémité circulaire 14a, une extrémité rectiligne 14b et une extrémité recourbée 14c sensiblement perpendiculaire à l'extrémité rectiligne 14b. L'extrémité rectiligne 14b est guidée en translation selon la direction T par une cuvette déterminée par deux parties en relief 13a et 13b de la coupelle inférieure 13.

L'extrémité 14c sensiblement perpendiculaire à la direction de translation T présente une extrémité recourbée et, de préférence, amincie 15. L'extrémité 15 recourbée est apte à être insérée dans un orifice d'indexation 16 choisi parmi les trois orifices 16, 17 et 18 pratiqués dans la coupelle inférieure 13.

Pour déplacer le ressort 14 d'une position choisie à une autre position d'indexation, on insère un outil dans l'espace 19 pour soulever l'extrémité recourbée 15 du ressort 14 et la déplacer dans une position choisie. On appuie ensuite sur le bord extérieur 20 de l'extrémité coudée 15 pour insérer cette extrémité 15 dans un orifice 17 ou 18.

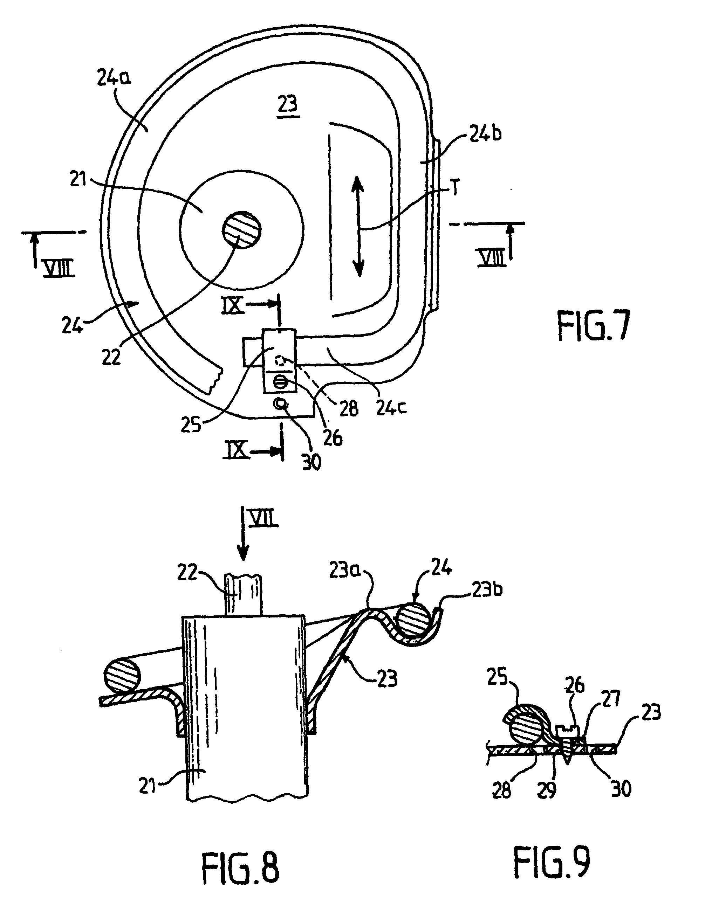

En référence aux figures 7 à 9, une jambe de suspension Mac Pherson comporte un amortisseur avec un corps 21 et une tige 22, une coupelle inférieure 23 solidaire du corps de l'amortisseur et un ressort 24 hélicoïdal monté entre la coupelle inférieure 23 et une coupelle supérieure, non représentée.

Le ressort 24 comporte une portion hélicoïdale 24a, une portion rectiligne 24b et une extrémité 24c sensiblement perpendiculaire à l'extrémité rectiligne 24b. L'extrémité rectiligne 24b est guidée en translation selon la direction T par une conformation formant cuvette de translation délimitée par une ondulation 23a et un rebord 23b.

Pour déplacer le ressort 24, il suffit ainsi de déplacer l'extrémité 24c en translation selon la direction T. L'extrémité 24c est solidarisée à la coupelle 23 par un moyen 25 entourant au moins partiellement l'extrémité 24c. Ce moyen 25 présente, de préférence, une conformation en collier ou en patte recourbée, apte à être fixée à la coupelle inférieure 23 de manière démontable. A cet effet, on utilise par exemple une vis 26, ou une goupille, ou un boulon, ou tout autre moyen mécanique analogue de fixation comme un rivet.

La vis 26 est vissée dans un orifice 27 de l'extrémité de la patte recourbée 25 et dans un trou ou taraudage correspondant 28, 29 ou 30 pratiqué dans la coupelle inférieure 23.

Le réglage de ce mode de réalisation s'effectue de manière analogue à celui décrit en référence au premier mode de réalisation des figures 1 à 3, à l'aide d'un maillet ou autre instrument approprié permettant de provoquer le déplacement du ressort 24. La vis 26 peut être partiellement desserrée pour permettre un réglage géométrique préalable, avant de fixer le ressort 24 en position à l'aide de la patte recourbée 25.

L'invention décrite en référence à trois modes de réalisation particuliers n'y est nullement limitée, mais couvre au contraire toute modification de forme et toute variante de réalisation dans le cadre et l'esprit de l'invention. L' essentiel est que le ressort 4, 14 ou 24 présente une conformation appropriée pour permettre son déplacement en translation selon une direction prédéterminée correspondant à un guidage par une conformation correspondante de la coupelle inférieure 3, 13 ou 23.

## Revendications

1. Jambe de force d'une suspension de roue de type Mac Pherson, comportant un amortisseur avec un corps (1, 11, 21) et une tige (2, 12, 22) ; ladite tige (2, 12, 22) étant entourée par un ressort hélicoïdal (4, 14, 24) ; ledit ressort hélicoidal (4, 14, 24) étant monté entré une coupelle inférieure (3, 13, 23) solidaire du corps (1, 11, 21) d' amortisseur et une coupelle supérieure traversée par la tige d'amortisseur ; **caractérisée par le fait que** la jambe de force comporte des moyens capables d'immobiliser la première spire du ressort (4, 14, 24) sur et par rapport à la coupelle inférieure (3, 13, 23) en différentes positions prédéterminées sur la coupelle inférieure (3, 13, 23).

2. Jambe de force selon la revendication 1, **caractérisée par le fait que** le ressort (4, 14, 24) comporte une extrémité (4c, 14c, 24c) s'étendant transversalement à une direction (T) de translation définie par les différentes positions prédéterminées et comporte une partie (4b, 14b, 24b) sensiblement rectiligne parallèle à la direction de translation.

3. Jambe de force selon la revendication 1 ou la revendication 2, **caractérisée par le fait que** ladite extrémité (4c, 14c) du ressort (4, 14) s'étendant transversalement à la direction (T) de translation comporte une conformation d'indexation (5, 15).

4. Jambe de force selon la revendication 3, **caractérisée par le fait que** la conformation d'indexation (5) comporte au moins un orifice (5) apte à être traversé par un moyen mécanique (6) de liaison à la coupelle inférieure (3).

5. Jambe de force selon la revendication 3, **caractérisée par le fait que** la conformation d'indexation comporte au moins une extrémité recourbée (15) apte à être insérée dans un orifice (16 à 18) d'indexation choisi parmi une pluralité d'orifices (16-18) réalisés dans la coupelle inférieure (13).

6. Jambe de force selon la revendication 1 ou la revendication 2, **caractérisée par le fait que** ladite extrémité (24c) du ressort (24) s'étendant transversalement à la direction (T) de translation est apte à être solidarisée à la coupelle inférieure (23) par un moyen (25) entourant au moins partiellement ladite extrémité (24c).

7. Jambe de force selon la revendication 6, **caractérisée par le fait que** ledit moyen (25) entourant au moins partiellement ladite extrémité (24c) du ressort (24) présente une conformation en collier ou en patte recourbée.

8. Jambe de force selon la revendication 7, **caractérisée par le fait que** ladite conformation (25) en collier ou en patte recourbée présente une extrémité de fixation par un moyen mécanique (26) de liaison à la coupelle inférieure (23).

9. Jambe de force selon la revendication 4 ou la revendication 8, **caractérisée par le fait que** le moyen mécanique (26) de liaison à la coupelle inférieure (23) est un moyen remplaçable, du genre vis, goupille, boulon ou analogue.

10. Jambe de force selon l'une des revendications 2 à 9, **caractérisée par le fait que** ladite partie rectiligne (4b, 14b, 24b) parallèle à la direction (T) de translation est parallèle à la direction d'avancement d'un véhicule auquel la jambe de force est destinée.

## Patentansprüche

1. Federbein einer Radaufhängung nach der Mac Pherson-Bauart, die einen Dämpfer mit einem Körper (1, 11, 21) und eine Kolbenstange (2, 12, 22) aufweist, wobei die Kolbenstange (2, 12, 22) von einer Schraubenfeder (4, 14, 24) umgeben ist und diese Schraubenfeder (4, 14, 24) zwischen einem unteren Federteller (3, 13, 23), der fest mit dem Körper (1, 11, 21) des Dämpfers verbunden ist, und einem oberen Federteller angeordnet ist, der von der Dämpferstange durchkreuzt wird, **dadurch gekennzeichnet, dass** das Federbein Einrichtungen aufweist, die die erste Windung der Feder (4, 14, 24) auf dem und in Bezug auf den unteren Federteller (3, 13, 23) in unterschiedlichen Stellungen festlegen kann, die auf dem unteren Federteller (3, 13, 23) vorbestimmt sind.

2. Federbein nach Anspruch 1, **dadurch gekennzeichnet, dass** die Feder (4, 14, 24) ein Ende (4c, 14c, 24c) aufweist, das quer zu einer Bewegungsrichtung (T) verläuft, die durch verschiedene festgelegte Stellungen bestimmt wird und einen Abschnitt (4b, 14b, 24b) aufweist, der genau geradlinig parallel zur Bewegungsrichtung verläuft.

3. Federbein nach Anspruch 1 oder 2, **dadurch gekennzeichnet, dass** das Ende (4c, 14c) der Feder (4, 14), das quer zur Bewegungsrichtung (T) verläuft, eine Indexierungsform (5, 15) aufweist.

4. Federbein nach Anspruch 3, **dadurch gekennzeichnet, dass**
die Indexierungsform (5) wenigstens eine Öffnung (5) aufweist, die von einem mechanischem Verbindungsmittel (6) zum unteren Federteller (3) durchkreuzt werden kann.

5. Federbein nach Anspruch 3, **dadurch gekennzeichnet, dass**
die Indexierungsform wenigstens ein gebogenes Ende (15) aufweist, dass in eine Indexierungsöffnung (16 bis 18) eingeführt werden kann, die aus mehreren im unteren Federteller (23) befindlichen Öffnungen (16 bis 18) ausgewählt wird.

6. Federbein nach Anspruch 1 oder Anspruch 2, **dadurch gekennzeichnet, dass** dieses Ende (24c) der Feder, das quer zur Bewegungsrichtung (T) verläuft, durch ein Mittel (25), dass zumindest teilweise das Ende (24c) umgibt, am unteren Federteller (23) befestigt werden kann.

7. Federbein nach Anspruch 6, **dadurch gekennzeichnet, dass** dieses Mittel (25), das zumindest teilweise jenes Ende (24c) der Feder (24) umgibt, die Form eines Rings oder einer gebogenen Lasche hat.

8. Federbein nach Anspruch 7, **dadurch gekennzeichnet, dass** diese Form (25) eines Rings oder einer gebogenen Lasche durch ein mechanisches Verbindungsmittel (26) zum unteren Federteller (23), das Ende der Befestigung bildet.

9. Federbein nach Anspruch 4 oder Anspruch 8, **dadurch gekennzeichnet, dass** das mechanische Verbindungsmittel (26) zum unteren Federteller (23) ein ersetzbares Mittel, wie beispielweise Schrauben, Stifte, Bolzen oder Ähnliches, ist.

10. Federbein nach einem der Ansprüche 2 bis 9, **dadurch gekennzeichnet, dass** dieser Abschnitt (4b, 14b, 24b), der geradlinig parallel zur Bewegungsrichtung (T) verläuft, parallel zur Bewegungsrichtung eines Fahrzeugs, für welches das Federbein bestimmt ist, verläuft.

## Claims

1. A strut for a MacPherson-type wheel suspension, comprising a shock absorber with a body (1, 11, 21) and a rod (2, 12, 22); said rod (2, 12, 22) being surrounded by a coil spring (4, 14, 24); said coil spring (4, 14, 24) being mounted between a lower cup (3, 13, 23) integral. with the shock absorber body (1, 11, 21) and an upper cup through which the shock absorber rod passes, **characterised by** the fact that the strut comprises means capable of immobilising the first turn of the spring (4, 14, 24) on and relative to the lower cup (3, 13, 23) in different predetermined positions on the lower cup (3, 13, 23).

2. A strut according to Claim 1, **characterised by** the fact that the spring (4, 14, 24) comprises an end (4c, 14c, 24c) which extends transversely to a direction (T) of translation defined by the different predetermined positions and comprises a substantially rectilinear part (4b, 14b, 24b) parallel to the direction of translation.

3. A strut according to Claim 1 or 2, **characterised by** the fact that said end (4c, 14c) of the spring (4, 14) extending transversely to the direction (T) of translation comprises an indexing shaped section (5, 15).

4. A strut according to Claim 3, **characterised by** the fact that the indexing shaped section (5) comprises at least one orifice (5) through which a mechanical means (6) for connecting to the lower cup (3) is able to pass.

5. A strut according to Claim 3, **characterised by** the fact that the indexing shaped section comprises at least one curved end (15) capable of being inserted into an indexing orifice (16 to 18) selected from among a plurality of orifices (16-18) formed in the lower cup (13).

6. A strut according to Claim 1 or 2, **characterised by** the fact that said end (24c) of the spring (24) extending transversely to the direction (T) of translation is capable of being joined to the lower cup (23) by a means (25) surrounding said end (24c) at least in part.

7. A strut according to Claim 6, **characterised by** the fact that said means (25) surrounding said end (24c) of the spring (24) at least in part is shaped like a collar or a curved lug.

8. A strut according to Claim 7, **characterised by** the fact that said shaping (25) like a collar or a curved lug has an end for fastening by a mechanical means (26) for connecting to the lower cup (23).

9. A strut according to Claim 4 or 8, **characterised by** the fact that the mechanical means (26) for connecting to the lower cup (23) is a replaceable means, of the type screw, pin, bolt or similar.

10. A strut according to one of Claims 2 to 9, **characterised by** the fact that said rectilinear part (4b, 14b, 24b) parallel to the direction (T) of translation is parallel to the direction of advance of a vehicle for which the strut is intended.
